Europäisches Patentamt

European Patent Office

Office européen des brevets

(11) Veröffentlichungsnummer: **0 352 562**
**A2**

(12) **EUROPÄISCHE PATENTANMELDUNG**

(21) Anmeldenummer: 89112888.6

(22) Anmeldetag: 14.07.89

(51) Int. Cl.4: **C08G 69/34 , C08G 69/36**

(30) Priorität: 27.07.88 DE 3825411

(43) Veröffentlichungstag der Anmeldung:
31.01.90 Patentblatt 90/05

(84) Benannte Vertragsstaaten:
**DE ES FR GB IT NL**

(71) Anmelder: **BAYER AG**

**D-5090 Leverkusen 1 Bayerwerk(DE)**

(72) Erfinder: **Nielinger, Werner, Dr.**
**Bärenstrasse 21**
**D-4150 Krefeld(DE)**
Erfinder: **Böckmann, August, Dr.**
**Bärenstrasse 23**
**D-4150 Krefeld(DE)**
Erfinder: **Brinkmeyer, Hermann, Dr.**
**Carl-Duisberg-Strasse 23**
**D-4150 Krefeld(DE)**
Erfinder: **Schulte, Helmut**
**Horstdyk 73a**
**D-4150 Krefeld(DE)**

(54) **Verfahren zur Herstellung von Polyamidfolien.**

(57) Die Erfindung betrifft ein Verfahren zur Herstellung von schrumpffähigen Folien aus Copolyamiden mit gutem Verarbeitungsverhalten. Die Copolyamide bestehen aus etwa äquimolaren Mengen an Dimerfettsäuren und Diaminen.

EP 0 352 562 A2

EP 0 352 562 A2

**Verfahren zur Herstellung von Polyamidfolien**

Die Erfindung betrifft ein Verfahren zur Herstellung von schrumpffähigen Folien aus Copolyamiden mit gutem Verarbeitungsverhalten.

Folien aus Polyamiden zeichnen sich durch eine Vielzahl vorteilhafter Eigenschaften aus, beispielsweise durch hohe Festigkeit, Zähigkeit, Transparenz und Brillianz. Sie sind gegen Fette und Öle beständig und haben eine gute Sperrwirkung gegen verschiedene Gase und Aromastoffe. Aufgrund dieser Eigenschaften finden sie vielfältigen Einsatz zur Verpackung von Lebensmitteln und technischen Produkten. Dabei ist im Hinblick auf ein ansprechendes Aussehen die Verwendung von glasklaren Folien erwünscht, sie sollen keine Fehler wie Stippen oder Poren aufweisen.

Bei der Herstellung von Folien aus Polyamid 6 enthält das Ausgangsmaterial häufig Nukleierungsmittel und Schmiermittel, um hohe Abzugsgeschwindigkeiten erreichen zu können. Diese Maßnahmen erlauben es auch, Polyamide mit niedrigerem Molekulargewicht einzusetzen, wodurch die Gefahr einer thermischen Schädigung der Polyamide geringer wird.

Zur Verbesserung der rheologischen Eigenschaften bei der Verarbeitung von Polyamiden durch Spritzguß oder Extrusion ist in der US-Patentschrift 4 062 819 der Zusatz von Polyamiden aus Diaminen und höher molekularen Dicarbonsäuren, beispielsweise dimerisierten Fettsäuren, beschrieben worden. Für die Herstellung von Folien für Verpackungen ist eine derartige Polyamidmischung jedoch nicht geeignet, da trübe und wenig brilliante Folien mit schlechter Tiefziehfähigkeit entstehen.

Folien aus Polyamid 6 sind nur wenig schrumpffähig. Deshalb sind sie für die Verpackung bestimmter Lebensmittel wie Wurst oder Kochschinken, bei denen ein festes Umschließen des Füllgutes gewünscht wird, nicht geeignet. Zwar wurden schon beispielsweise in der DE-OS 19 05 539 und in der DE-OS 19 65 479 auf der Basis von $\omega$-Aminoundecansäure oder Laurinlactam besser schrumpffähige Polyamide vorgeschlagen. Diese sind zur Herstellung von Folien, insbesondere aber von siegelfähigen Verbundfolien, weniger geeignet. Ihre geringe Beständigkeit gegenüber Chemikalien wie Alkoholen ist ebenfalls von Nachteil.

Es wurde nun überraschenderweise gefunden, daß die genannten Nachteile nicht auftreten, wenn man an Stelle eines Zusatzes von Polyamiden aus Diaminen und höher molekularen Dicarbonsäuren ein Copolyamid aus $\epsilon$-Caprolactam und 0,5-15,0 Gewichtsteilen, vorzugsweise 1,0-10,0 Gewichtsteilen von Einheiten aus einer dimerisierten Fettsäure (Dimersäure) und einem Diamin verwendet. Es werden etwa äquvivalente Mengen Dimersäure/Diamin (z.B. 0,95:1 bis 1:0,95), vorzugsweise 0,98:1 bis 1:0,98, eingesetzt.

Die dimerisierten Fettsäuren werden durch katalytische Kondensation von ungesättigten Fettsäuren hergestellt, wobei noch vorhandene Doppelbindungen anschließend hydriert werden können. Die dimerisierten Fettsäuren sind bekannt und handelsüblich. Bevorzugt sind jene Produkte, die aus Fettsäuren mit 16 bis 20 Kohlenstoffatomen erhalten werden und dementsprechend eine Säurezahl von 180 bis 219 mg KOH/g aufweisen. Sie können bis zu 3 Gewichtsteilen, bevorzugt bis zu 2 Gewichtsteilen trimerisierte Säure enthalten.

Als Diamine kommen beispielsweise Hexamethylendiamin, 3-Aminomethyl-3,5,5-trimethylcyclohexylamin, 4,4´-Di-amino-dicyclohexylmethan, 4,4´Diaminodicyclohexylpropan-(2,2), 4,4´-Diamino-3,3´-dimethyldicyclohexylmethan, m-Xylylendiamin, 2,2,4- oder 2,4,4-Trimethylhexymethylendiamin in Betracht. Bevorzugt sind das Hexamethylendiamin und das 3-Aminomethyl-3,5,5-trimethylcyclohexylamin.

Die Herstellung der Copolyamide erfolgt nach den für die hydrolytische Polymerisation von $\epsilon$-Caprolactam bekannten Verfahren. Sie kann diskontinuierlich in Autoklaven oder kontinuierlich in VK-Rohren durchgeführt werden.

Die relative Viskosität der Copolyamide sollte, gemessen an einer einprozentigen Lösung in m-Kresol, 2,9-4,5, vorzugsweise 3,2 bis 4,0 betragen.

Die Copolyamide sind zur Herstellung von Flach- oder Blasfolien mit hoher Reißdehnung, ferner zur Herstellung von Verbundfolien geeignet. Man kann dazu vorzugsweise übliche Einwellenextruder mit eingängigen Dreizonenschnecken oder Hochleistungsschnecken, die mit Scher-und Mischelementen bestückt sind, verwenden. Die Gesamtlänge der Schnecke sollte mindestens 20 D, vorzugsweise mindestens 24 D betragen. Die Verarbeitungstemperatur ist zwischen 200°C und 300°C, vorzugsweise zwischen 220°C und 260°C.

Das erfindungsgemäße Verfahren ermöglicht die Herstellung von Folien mit einer Dicke von 10-50$\mu$m, vorzugsweise von 15-25 $\mu$m, bei gleichzeitiger hoher Abzugsgeschwindigkeit von 50-180 m/min, vorzugsweise 80-150 m/min auch ohne Zusatz von Nukleierungsmitteln aus Polyamiden mit hohem Molekulargewicht. Durch die geringere thermische Belastung bei der niedrigeren Verarbeitungstemperatur ist auch bei den hochmolekularen Produkten die Gefahr einer Schädigung des Polyamids wesentlich verringert, man erhält praktisch stippenfreie Folien mit hoher Transparenz und gutem Oberflächenglanz.

Das Schrumpfverhalten der Folien, gemessen nach DIN 53 372, ist gegenüber Folien aus Polyamid 6 wesentlich verbessert, die Folien schrumpfen etwa doppelt so stark wie solche aus Polyamid 6.

Die Folien können weitere bekannte Additive enthalten, beispielsweise Stabilisatoren, Lichtschutzmittel, Farbstoffe, Pigmente und ggf. weitere Verarbeitungshilfsmittel bzw. Nukleierungsmittel.

Die Folien kommen für Anwendungen auf dem Verpackungssektor in Betracht. Insbesondere dienen sie zur Herstellung stärker beanspruchter Verpackungen für den technischen Bereich und auch zur Herstellung kaschierter und tiefziehfähiger Produkte.

Beispiele

Eine Mischung aus 258 g $\epsilon$-Caprolactam, 31,4 g $\epsilon$-Aminocapronsäure, 12,2 g dimerisierter Fettsäure und 3,5 g Isophorondiamin wird unter Rühren in einer Stickstoffatmosphäre eine Stunde bei 200°C vorkondensiert und danach 5 Stunden bei 270°C gehalten. Das erstarrte Produkt wird granuliert, dreimal je 4 Stunden mit Wasser von 90°C extrahiert und getrocknet.

Die dimerisierte Fettsäure ist ein Handelsprodukt der Firma Unichema International mit einer Säurezahl von 198 und einem Trimerengehalt von 1,0 %.

Die relative Viskosität des Polyamids, gemessen an einer einprozentigen Lösung in m-Kresol bei 25°C in einem Ubbelohde-Viskosimeter ist 3,4.

Die Schmelze des Copolyamids ist vollkommen klar. Es lassen sich daraus bis zu hohen Schichtdicken transparente Filme herstellen.

Vergleichsbeispiel 1:

Herstellung eines Polyamids aus der dimerisierten Fettsäure und Hexamethylendiamin

Man erhitzt 528,8 g der dimerisierten Fettsäure aus Beispiel 1 und 103,3 g Hexamethylendiamin unter Rühren in einer Stickstoffatmosphäre eine Stunde auf 200°C und zwei Stunden auf 270°C. Man erhält ein transparentes Polyamid mit einem Schmelzmaximum (DTA) von 83°C und einer relativen Viskosität von 1,5.

5 Teile dieses Polyamids und 95 Teile Polyamid 6 mit einer relativen Viskosität von 3,5 werden gemischt und zu Filmen wie in Beispiel 1 verarbeitet. Die Verarbeitung der Mischung ist im Vergleich zur Verarbeitung des Copolyamids wesentlich schwieriger, da ds Granulat in den Extruder schlecht einzieht. Die Schmelze der Mischung ist leicht trübe, die Folien sind weniger transparent und weniger brilliant als Folien gemäß Beispiel 1.

Beispiel 2

Man erhitzt unter Rühren in einer Stickstoffatmosphäre 8 300 g $\epsilon$-Caprolactam, 522 g $\epsilon$-Aminocapronsäure, 1 020 g dimerisierte Fettsäure und 292 g Isophorondiamin eine Stunde auf 210°C und sieben Stunden auf 270°C bei Atmosphärendruck. Das Copolyamid wird dann als Borste durch ein Wasserbad abgesponnen und nach dem Granulieren viermal je drei Stunden mit Wasser von 90°C extrahiert und getrocknet. Es hat eine relative Viskosität von 3,5.

Beispiel 3

Wie in Beispiel 2 beschrieben, stellt man ein Copolyamid aus 9 050 g $\epsilon$-Caprolactam, 522 g $\epsilon$-Aminocapronsäure, 408 g dimerisierter Fettsäure und 117 g Isophorondiamin her (Polyamid 6-Anteil: 95 gew.-%).

Aus den Produkten gemäß Beispiel 2 und 3 werden auf einem Einwellenextruder mit einem Schneckendurchmesser von 45 mm über eine Breitschlitzdüse Folien mit einer Dicke von 50 $\mu$m hergestellt, an denen die freie Schrumpfung nach DIN 53 372 gemessen wird. Dazu werden die Folien bei Raumtemperatur bzw. bei 60°C auf 250 % gedehnt, anschließend wird die Schrumpfung nach einer Lagerung von drei Sekunden in Wasser von 75° C gemessen.

Die bei der Herstellung der Folien am Extruder eingestellte Temperatur, die Temperatur der Gießwalze und die Werte der Schrumpfungsmessungen sind in der folgenden Tabelle aufgeführt. Das Vergleichsprodukt ist ein Polyamid 6 mit einer relativen Viskosität von 3,8.

Tabelle:

| Polyamid | eingest. Temp. (° C) | Walzentemp. (° C) | Schrumpfung | |
|---|---|---|---|---|
| | | | Raumtemp.(%) | 60° C (%) |
| Beispiel 2 | 210-220 | 35 | 11,4 | 16,1 |
| Beispiel 3 | 220-230 | 45-60 | 9,8 | 12,2 |
| Polyamid 6 | 260 | 90 | 5,6 | 7,7 |

**Ansprüche**

1. Verfahren zur Herstellung von Flachfolien bei einer Temperatur zwischen 220 und 260° C, dadurch gekennzeichnet, daß man ein Copolyamid aus 85,0-99,5 Gewichtsteilen ε-Caprolactam und 0,5-15,0 Gewichtsteilen von Einheiten aus äquimolekularen Mengen von dimerisierten Fettsäuren und Diaminen verwendet.

2. Verfahren zur Herstellung von Flachfolien gemäß Anspruch 1, dadurch gekennzeichnet, daß als dimerisierte Fettsäure ein Produkt mit 32-40, vorzugsweise 36 C-Atomen und weniger als 5, vorzugsweise weniger als 3 Gewichtsteilen trimerisierter Fettsäure eingesetzt wird.

3. Verfahren zur Herstellung von Flachfolien gemäß Ansprüche 1 und 2, dadurch gekennzeichnet, daß als Diamin Hexamethylendiamin und/oder 3-Aminomethyl-3,5,5-trimethylcyclohexylamin eingesetzt wird.